# EUROPÄISCHE PATENTSCHRIFT

(11) **EP 2 461 097 B1**
(45) Veröffentlichungstag und Bekanntmachung des Hinweises auf die Patenterteilung: **27.11.2019**
(21) Anmeldenummer: 11002007.0
(22) Anmeldetag: 10.03.2011
(51) Int. Cl.: F23C 7/02, F23L 7/00, F23C 99/00

(54) **VERFAHREN ZUR VERDÜNNTEN VERBRENNUNG**
METHOD FOR DILUTED COMBUSTION
PROCÉDÉ DESTINÉ À LA COMBUSTION DILUÉE

(30) Priorität: 01.12.2010 DE 102010053068
(43) Veröffentlichungstag der Anmeldung: 06.06.2012
(73) Patentinhaber: Linde AG, 80331 München (DE)
(72) Erfinder: Adendorff, Martin, 80687 München (DE); Rudig, Stefan, 50859 Köln (DE)
(74) Vertreter: Gellner, Bernd

(56) Entgegenhaltungen:
- EP-A1- 0 989 362
- EP-A2- 0 554 868
- EP-A2- 0 757 205
- EP-A2- 2 166 284
- WO-A2-2008/007016
- DE-B- 1 053 443
- GB-A- 1 143 117
- JP-A- 2005 016 854
- US-A1- 2003 054 301

## Beschreibung

Die vorliegende Erfindung betrifft ein Verfahren zur verdünnten Verbrennung.

Aus dem Stand der Technik sind Brenner mit flammenloser Verbrennung bekannt. In dem Informationsblatt "projektinfo 07/06" des BINE Informationsdienstes, das im Internet unter der Adresse http://www.bmwi.de/BMWi/Redaktion/PDF/B/bine-themen-info-flammenlose-verbrennung,property=pdf,bereich=bmwi,sprache=de,rwb=true.pdf abrufbar ist, ist beschrieben dass bei derartigen Brennern Brenngas und Verbrennungsluft unvermischt mit hoher Strömungsgeschwindigkeit in eine Brennkammer strömen. Der wesentliche Unterschied zu herkömmlichen Brennern mit Flamme ist eine starke interne Rezirkulation der Abgase in der Brennkammer und deren Vermischung mit der Verbrennungsluft. Durch den derart verminderten Sauerstoffgehalt in der Brennluft und durch die verzögerte Vermischung von Luft und Brenngas kann sich keine Flammenfront ausbilden. Bei ausreichend hohen Temperaturen, von zumindest 450 °C bis 500 °C, oxidiert der Brennstoff im gesamten Brennraumvolumen. Dadurch stellen sich sehr homogene Temperaturen ein. Die Bildung thermischer Stickstoffoxide (NOx), die vor allem an einer Flammengrenze stattfindet, wird vermieden. Durch die gleichmäßigere Temperaturverteilung sinken nicht nur die Stickstoffoxidemissionen, sondern es lässt sich auch eine höhere mittlere Brennraumtemperatur aufrecht erhalten.

Bei herkömmlichen Brennern werden die Verbrennungsvorgänge meist mit UV-Messgeräten überwacht. Dies ist im flammenlosen Betrieb nicht immer möglich.. An Stelle der Messung eines UV-Signals tritt in der Regel eine Messung der Nutzraumtemperatur. Wird eine Grenztemperatur überschritten, sind die Zündung und der vollständige Ausbrand sichergestellt.

In der DE 44 00 831 A1 ist ein Brenner mit reduzierten Schadgasen beschrieben. Dieser Brenner umfasst einen zentralen Zuleitungskanal für einen Primärsauerstoffstrom, der auf der Mittelachse eines wassergekühlten Zuleitungskanals für Brennstoffstrom angeordnet ist und somit von dem Zuleitungskanal konzentrisch umgeben ist. Die Temperatur des Primärsauerstoffstroms ist ≤ 30 °C und der Anteil des Primärsauerstoffstroms an der stöchiometrisch benötigten Sauerstoffmenge ist < 1 %. Weiterhin ist vorgesehen Verbrennungsabgase zu rezirkulieren, um eine flammenlose Verbrennung zu gewährleisten. Es sind beispielsweise acht Hauptsauerstoffdüsen vorgesehen, die kreisförmig den Zuleitungskanal umgebend angeordnet sind. Durch die Rezirkulation der Verbrennungsabgase sollen Temperaturspitzen in der Flammenwurzel und damit Schadstoffemissionen verhindert werden. Die Flamme wird dadurch stabil am Austritt gehalten und brennt mit niedriger Flammentemperatur. Durch die Kühlung und die damit verbundene niedrige Temperatur von ≤ 30°C des Primärsauerstoffstroms wird erreicht, dass eine stabile Zündflamme mit kleinen Mengen an Primärsauerstoff bereitgestellt wird, die ein ausreichendes UV-Signal zur Überwachung des Brenners liefert.

Aus der US 4,907,961 geht ein Sauerstoffbrenner hervor. Dieser Brenner verwendet Sauerstoff oder mit Sauerstoff angereicherte Luft. Bei diesem Brenner ist vorgesehen einem Brennraum ein erstes Oxidant zuzuführen, das zumindest 30 Volumenprozent Sauerstoff enthält. Dieses Oxidant wird mit einer hohen Geschwindigkeit zugeführt. Weiterhin soll ein zweites Oxidant zugeführt werden, dessen Anteil zumindest 1 % der gesamten Sauerstoffmenge beträgt, die dem Brennraum zugeführt wird. Dieses zweite Oxidant enthält ebenfalls zumindest 30 Volumenprozent Sauerstoff und wird mit einer niedrigen Geschwindigkeit zugeführt. Mit Sauerstoff angereicherte Luft kann z.B. durch Mischung von reinem Sauerstoff und Luft erzeugt werden. An einer Grenzfläche zwischen den Gasen soll eine stabile Flamme aufrecht erhalten werden.

In der US 5,104,310 ist ein Brenner beschrieben, der mit reduzierter Flammentemperatur arbeitet. Dieser Brenner umfasst eine zentrale Sauerstoffdüse und zumindest eine Düse zur Brennstoffzuführung, die die Sauerstoffdüse konzentrisch umgibt. In radialem Abstand von der Sauerstoffdüse ist zumindest eine weitere Düse vorgesehen, die als Lavaldüse ausgebildet ist. Gemäß diesem Brenner soll der Sauerstoff mit sehr hoher Geschwindigkeit zugeführt werden, insbesondere um Umgebungsluft mit niedrigerer Temperatur als die Flamme anzusaugen, bevor der Sauerstoff aus der Sauerstoffdüse mit dem Brennstoff reagiert. Es können auch mehrere, um die zentrale Sauerstoffdüse konzentrisch angeordnete und radial davon beabstandete, periphere Sauerstoffdüsen vorgesehen sein. Der Anteil an Sauerstoffvolumen der durch die peripheren Düsen zugeführt wird beträgt zwischen 60 % und 90 % und vorzugsweise zwischen 75 % und 85 % der Gesamtsauerstoffmenge, die dem Brenner zugeführt wird. Der Hauptanteil des Sauerstoff enthaltenden Gases das für die Verbrennung des Brennstoffes notwendig ist wird somit über die peripher angeordneten Sauerstoffdüsen zugeführt. Durch diese Sauerstoffströme wird zusätzlich Umgebungsluft angesaugt bevor der Sauerstoff mit der Flamme reagiert. Die Umgebungsluft weist eine geringere Temperatur als die Flamme auf. Durch das Ansaugen von Umgebungsluft werden der Sauerstoffgehalt und die Temperatur in den peripheren Sauerstoffströmen reduziert. Diese Mischung wird bereitgestellt, bevor sie in Kontakt mit dem Brennstoff kommt. Diese Gasmischung besteht aus mit Sauerstoff angereicherter Luft, welche zumindest 50 % Sauerstoff enthält.

In der EP 0 685 683 A2 ist ein Brenner mit geringer NOx-Emission beschrieben. Gemäß diesem Brenner kann vorgesehen sein, dass die Brennkammer von einer Luftzuführeinrichtung mit einem so hohen Luftdurchsatz beaufschlagt wird, dass die aus dem düsenförmigen Auslass der Brennkammer austretenden Verbrennungsabgase durch Injektorwirkung angesaugt werden und somit wieder der Verbrennungsluft zugeführt werden. Dieser Brenner soll nach Überschreiten einer Temperatur von 600 °C bis 800 °C im Heizraum durch Umschalten der Brennstoffzufuhr in einen Normalbetriebszustand gebracht werden, in dem der hohe Austrittsimpuls insbesondere der Verbrennungsluft aus der Brennkammer beibehalten wird, wodurch die Reaktion von Brennstoff und Luft in dem Bereich vor dem Düsenaustritt in der Brennkammer weitgehend unterdrückt und in den Heizraum verlagert wird. Dieser Brenner kann eine Brennstoffdüse umfassen, die von einer koaxialen Brennstofflanze umgeben ist, wobei ein in eine Brennkammer mündender Verbrennungsluft-Zuführstutzen vorgesehen ist, der zusammen mit einem Verbrennungsventil eine Luftzuführeinrichtung ausbildet.

Aus der EP 1 355 111 A2 geht ein Brenner zur flammenlosen Verbrennung hervor. Dieser Brenner umfasst einen Reaktionsraum, der von einem Brenner mit einem Brennstoff-Luft-Gemisch gespeist wird. Der Brenner umfasst einen Luftzuführkanal der sich bis in einen vom Brennerkopf umschlossenen Innenraum erstreckt. Ein Brennstoffrohr erstreckt sich durch den Luftzuführkanal bis in den Innenraum. Das Brennstoffrohr ist zentral im Innenraum angeordnet und ist somit vom Luftzuführkanal umgeben. Der Brenner gibt den Brennstoff-Luft-Strahl quer zu seiner Längsachse ab. In oder an dem Brenner ist konzentrisch oder parallel zu der Brennerlängsachse ein Abgaskanal angeordnet. Die Austrittsrichtung des Brenners und die Richtung des Abgaskanals kreuzen einander. Gemäß diesem Brenner wird der Brennstoff parallel oder geneigt zur Ofenwand in einen Ofenraum eingebracht. Der Brennerkopf ist vorzugsweise so gestaltet, dass das Brennstoff-Luft-Gemisch an der Austrittsöffnung eine Geschwindigkeit annimmt, die ausreicht, eine etwaige Flamme fortzuspülen. Hierdurch wird eine flammenlose Betriebsart ermöglicht, bei der die Reaktion von Brennstoff und Luft auf einen größeren Teil des Reaktionsraums verteilt wird. Zudem saugt der Brennstoff-Luft-Strahl insbesondere in der Nähe der Eintrittsöffnung des Abgaskanals viel heißes Abgas an und reißt dieses mit, was den flammenlosen Betrieb zusätzlich unterstützt. Es kann beispielsweise ein Rekuperator oder ein Regenerator vorgesehen sein, um den Brennstoff, die Luft oder das Brennstoff-Luft-Gemisch vorzuwärmen. Bei diesem Brenner handelt es sich um einen Luftbrenner.

Aus der JP 2005 016854 A ist ein Sauerstoffbrenner bekannt, wobei Sauerstoff und Luft über mehrere kreisförmig angeordnete Düsen zugeführt werden. Außerdem beschreibt GB 1 143 117 A weiteren Stand der Technik.

Aufgabe der vorliegenden Erfindung ist es ein kostengünstiges, schadstoffarmes und prozessoptimiertes Verfahren mit einer weitestgehend flammenlosen Verbrennung und einen entsprechenden Brenner bereitzustellen.

Die Erfindung weist zur Lösung dieser Aufgabe die im Patentanspruch 1 angegebenen Merkmale auf. Vorteilhafte Ausgestaltungen hiervon sind in den weiteren Ansprüchen angegeben.

Erfindungsgemäß ist ein Verfahren zur verdünnten Verbrennung vorgesehen, bei dem mit einem Brenner ein Brennstoffstrom, ein Luftstrom und ein Sauerstoffstrom einem Brennraum zugeführt werden. Der Luftstrom und der Sauerstoffstrom werden räumlich getrennt voneinander zugeführt und sind unabhängig voneinander einstellbar. Dadurch kann zwischen einem reinen Betrieb mit Luft und einem reinen Betrieb mit Sauerstoff und einem Mischbetrieb mit Sauerstoff und Luft während des Brennvorganges gewechselt werden.

Unter einer verdünnten Verbrennung wird im Rahmen der vorliegenden Erfindung eine weitestgehend flammenlose Verbrennung verstanden, bei der durch Rezirkulation von Abgas lokale thermische Temperaturspitzen vermieden werden. Bei der Rezirkulation von Abgas kann es sich um eine interne oder eine externe Rezirkulation handeln. Durch den Begriff weitestgehend wird zum Ausdruck gebracht, dass eine permanent brennende Stützflamme vorhanden sein kann. Im gesamten Brennraum werden jedoch nicht die von herkömmlichen Flammen erreichten Temperaturspitzen erzielt.

Mit dem erfindungsgemäßen Verfahren wird durch die räumliche Trennung von Sauerstoff und Luft vermieden, dass Bereiche ausgebildet werden in denen einen hohe Sauerstoffkonzentration und gleichzeitig eine hohe Stickstoffkonzentration vorliegt. Derartige Bereiche werden insbesondere bei Brennern ausgebildet, die mit Sauerstoff angereicherte Luft als Oxidant verwenden. In diesen Bereichen kommt es bei der Verbrennung zur Bildung von Stickstoffoxiden (NOx). Dadurch dass Sauerstoff und Luft überwiegend getrennt voneinander mit Brennstoff reagieren werden die NOₓ-Emissionen erheblich reduziert.

In dem zwischen einem reinen Betrieb mit Luft und einem reinen Betrieb mit Sauerstoff und einem Mischbetrieb mit Sauerstoff und Luft während des Brennvorganges gewechselt werden kann, ist das Verfahren effizient auf den jeweiligen Prozess anpassbar.

Bei einem Betrieb mit reinem Sauerstoff wird dem Brennraum im Vergleich zum Betrieb mit Luft eine kleinere Gasmenge zugeführt, um die stöchiometrisch benötigte Menge an Oxidationsmittel bereitzustellen. Hierbei wird nahezu die gesamte Gasmenge zur Verbrennung genutzt. Dadurch, dass weniger Gas zugeführt wird, ist die Abgasmenge gering. Da im Oxidationsmittel nur Sauerstoff enthalten ist kommt es bei der gleichen Brennstoffmenge zu einem höheren Energieeintrag. Im Oxidationsmittel sind nahezu keine nicht-sauerstoff Bestandteile vorhanden wodurch weniger Energie über das Abgas verloren geht. Somit ist der Energieeintrag im Betrieb mit reinem Sauerstoff sehr hoch. Gase wie bspw. Stickstoff sind nahezu nicht vorhanden. Somit werden keine schädlichen NOx-Gase gebildet. Daher weist das Abgas in diesem Betriebszustand nur einen sehr geringen Schadstoffanteil auf. Hierdurch ist es möglich eine entsprechende Vorrichtung zum Ausführen des Verfahrens äußerst kompakt auszubilden und dennoch eine hohe thermische Kapazität bereitzustellen.

Im Betrieb mit Luft wird im Vergleich zum Betrieb mit reinem Sauerstoff eine größere Menge an Gas zur Oxidation in den Brennraum eingebracht, um die stöchiometrisch benötigte Menge an Oxidationsmittel bereitzustellen. Hierbei wird nicht die gesamte Gasmenge zur Verbrennung genutzt, da im Oxidationsmittel neben Sauerstoff auch Stickstoff und andere Bestandteile enthalten sind, die nicht für die Verbrennung nutzbar sind. Dadurch, dass mehr Gas zugeführt wird, um ausreichend Oxidationsmittel bereitzustellen ist die Abgasmenge größer. Eine größere Energiemenge geht über größere Abgasmenge verloren und es kommt zu einem geringeren Energieeintrag. Durch den in der Luft enthaltenen Stickstoff kommt es zudem zur Bildung von schädlichen NOₓ-Gasen. Daher weist das Abgas in diesem Betriebszustand einen höheren Schadstoffanteil auf. Dafür ist das Verfahren sehr kostengünstig ausführbar, da Luft im Gegensatz zu Sauerstoff deutlich weniger Kosten erzeugt.

Mit dem Brenner kann dem Brennraum ein weiterer Sauerstoffstrom zentral im Brennstoffstrom zugeführt werden. Dieser zentrale Sauerstoffstrom ist somit vom Brennstoffstrom umgeben und bildet mit einem Teil des Brennstoffs des Brennstoffstroms eine Stützflamme aus. Diese Stützflamme erzeugt permanent ein UV-Signal, das mit einem UV-Sonde detektierbar ist.

Die Ströme können beim Austritt aus dem Brenner die gleiche Richtung aufweisen, die in etwa parallel zu einer Längsrichtung des Brenners ist. Hierdurch wird insbesondere bei einem Betrieb mit Sauerstoff und Luft sichergestellt, dass die Luft und der Sauerstoff annähernd räumlich getrennt mit dem Brennstoff reagieren.

Beim Hochfahren kann der Brenner ausschließlich mit Sauerstoff betrieben werden. Durch den höheren Energieeintrag verkürzt sich die Zeit bis die Nenntemperatur erreicht ist gegenüber Brennern die mit angereicherter Luft betrieben werden erheblich. Zudem treten erheblich weniger NOx-Emissionen auf.

Im Nennbetrieb kann der Brenner dann ausschließlich mit Luft betrieben werden. Hierbei sind keine Drallkörper notwendig, um den in der Luft enthaltenen Sauerstoff mit Brennstoff in Kontakt zu bringen. Die im Nennbetrieb entstehenden Verwirbelungen durch die Abgasrezirkulation reichen hierfür aus. Drallkörper, die Bauraum erfordern und den Brenneraufbau aufwändiger machen sind nicht erforderlich. Hierdurch ist das Verfahren kostengünstiger und mit einer kompakteren Vorrichtung ausführbar.

Somit ist es möglich eine kompakte Vorrichtung mit Luft zu betreiben. Sollte der Wärmeeintrag beim Betrieb mit Luft nicht ausreichen kann je nach Bedarf Sauerstoff zudosiert werden, ein Mischbetrieb gefahren werden oder aber auch wieder vollständig mit reinem Sauerstoff gefahren werden.

Die Brennerleistung kann somit entsprechend an die Anforderungen des Verbrennungsvorgangs optimal angepasst und jederzeit optimiert werden.

Weiterhin kann Abgas in den Brennraum rezirkuliert werden, wobei diese Rezirkulation intern oder extern erfolgen kann. Hierdurch erfolgt eine weitere Reduktion der NOx-Emissionen.

Bei dem Verfahren werden Sauerstoff und/oder Luft jeweils mit einer hohen Geschwindigkeit einem Brennraum zugeführt. Unter einer hohen Geschwindigkeit des Sauerstoffstroms wird eine Geschwindigkeit von zumindest 50 m/s und vorzugsweise zwischen 80 m/s bis 200 m/s verstanden. Unter einer hohen Geschwindigkeit des Luftstroms wird eine Geschwindigkeit von zumindest 50 m/s und vorzugsweise zwischen 80 m/s bis 150 m/s verstanden. Hierbei wird die Luft nicht "direkt" mit Sauerstoff angereichert wie dies bei aus dem Stand der Technik bekannten Brennern der Fall ist, da die Luft und der Sauerstoff als separate Ströme bzw. über separate Düsen zugeführt werden. Das gesamte Verfahren kann in einem Betriebszustand mit Sauerstoff und Luft dennoch als "angereichert" angesehen werden.

Ein erfindungsgemäßer Brenner zur verdünnten Verbrennung umfasst, eine Brennstoffdüse zum Zuführen von Brennstoff in einen Brennraum, zumindest eine Luftdüse zum Zuführen von Luft in einen Brennraum, und zumindest eine Sauerstoffdüse zum Zuführen von Sauerstoff in einen Brennraum. Die Luftdüse und die Sauerstoffdüse sind räumlich voneinander getrennt angeordnet.

Die Erfindung wird im folgenden anhand der Zeichnungen näher erläutert. Diese zeigen in:
Fig. 1 einen erfindungsgemäßen Brenner schematisch in einer seitlich geschnittenen Ansicht entlang der Linie A-A mit Komponenten,
Fig. 2 den erfindungsgemäßen Brenner aus Figur 1 schematisch in einer Draufsicht von vorne,
Fig. 3 einen erfindungsgemäßen Ofen mit Brenner und Brennkammer in einer schematischen Darstellung,
Fig. 4 eine Düsenanordnung beispielhaft in einer Draufsicht,
Fig. 5 eine weitere Düsenanordnung beispielhaft in einer Draufsicht,
Fig. 6 eine weitere Düsenanordnung beispielhaft in einer Draufsicht,
Fig. 7 eine weitere Düsenanordnung beispielhaft in einer Draufsicht,
Fig. 8 eine weitere Düsenanordnung beispielhaft in einer Draufsicht, und
Fig. 9 eine weitere Düsenanordnung beispielhaft in einer Draufsicht.

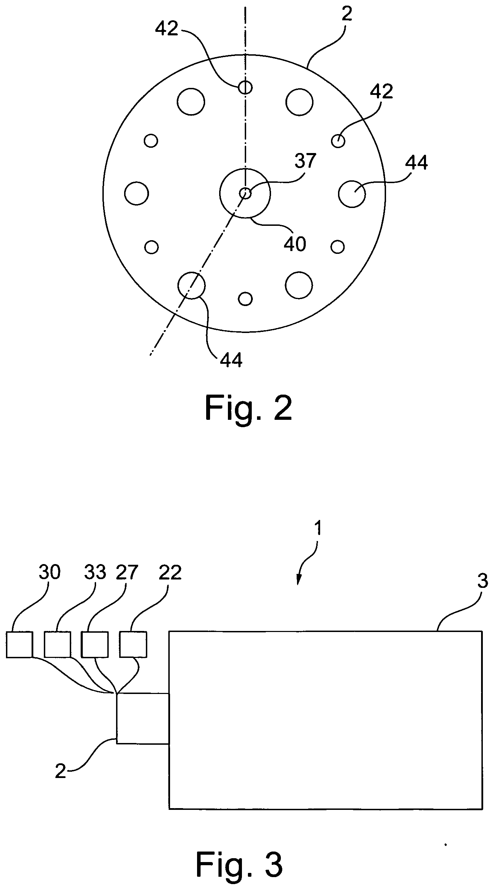

Ein erfindungsgemäßer Ofen 1 umfasst im wesentlichen einen Brenner 2 und eine Brennkammer 3 (Figur 3).

Der gesamte Ofen 1 wird im folgenden nur schematisch beschrieben, um den prinzipiellen Aufbau der erfindungsgemäßen Vorrichtung zu erläutern.

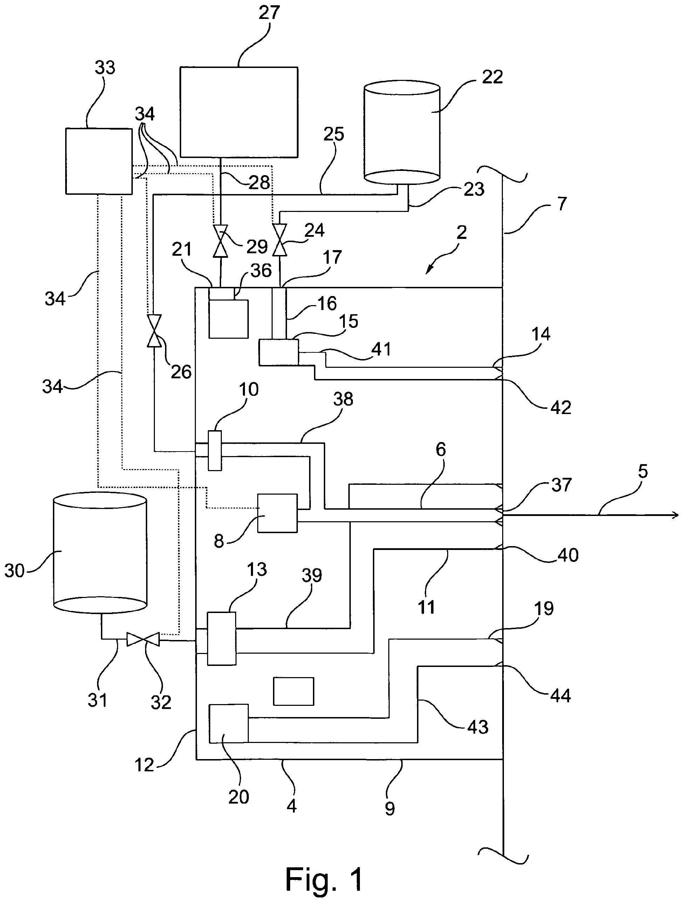

Der Brenner 2 weist ein zylindrisches Brennergehäuse 4 mit einer Vorderwandung, die als Brennerseite 7 bezeichnet wird, einer Rückwandung 12 und einer Mantelwandung 9 auf (Fig. 1). Eine Richtung senkrecht zur Vorderwandung 7 und zur Rückwandung 12 und in Richtung von der Rückwandung 12 zur Vorderwandung 9 wird als Längsrichtung 5 des Brenners 2 bezeichnet.

In dem Brennergehäuse 4 des Brenners 2 ist in etwa mittig ein sich in Längsrichtung 5 des Brenners 2 erstreckendes zentrales Sauerstoffdüsenrohr 6 angeordnet. Ein Ende des Sauerstoffdüsenrohres 6 endet an der Brennerseite 7 des Brenners. In diesem Endbereich ist eine zentrale Sauerstoffdüse 37 angeordnet.

Am im Brennergehäuse 4 liegenden Ende des Sauerstoffdüsenrohres 6 ist ein UV-Sensor 8 angeordnet.

Das Sauerstoffdüsenrohr 6 ist über ein Sauerstoffrohr 38 mit einen Sauerstoffanschluss 10 verbunden. Der Sauerstoffanschluss 10 ist an der Rückwandung 12 des Brennergehäuses 4 ausgebildet.

Weiterhin ist im Brennergehäuse 4 ein die zentrale Sauerstoffdüse 6 konzentrisch umgebendes Brennstoffdüsenrohr 11 vorgesehen. Ein Ende des Brennstoffrohres 11 endet an der Brennerseite 4. In diesem Endbereich ist eine Brennstoffdüse 40 ausgebildet.

Das andere Ende des Brennstoffdüsenrohres 11 ist über ein Brennstoffrohr 39 mit einem Brennstoffanschluss 13 verbunden. Der Brennstoffanschluss 13 ist an der Rückwandung 12 des Brennergehäuses 4 ausgebildet.

Im Brennerkörper 4 des Brenners 2 sind sechs Hauptsauerstoffdüsenrohre 14 ausgebildet. Die sechs Hauptsauerstoffdüsenrohre 14 sind kreisförmig mit jeweils gleichem Winkelabstand konzentrisch um das zentrale Sauerstoffdüsenrohr 6 herum angeordnet.

Ein Ende der Hauptsauerstoffdüsenrohre 14 ist jeweils über ein Hauptsauerstoffrohr 41 mit einem Sauerstoffringkanal 15 verbunden und das andere Ende endet in der Brennerseite 7. Am brennerseitigen Ende der Hauptsauerstoffdüsenrohre 14 ist jeweils eine Hauptsauerstoffdüse 42 angeordnet. Der Sauerstoffringkanal 15 erstreckt sich im Brennerkörper 4 in etwa parallel zur Brennerseite 7.

Über einen Rohrabschnitt 16 ist der Sauerstoffringkanal 15 mit einem Hauptsauerstoffanschluss 17 verbunden. Der Hauptsauerstoffanschluss 17 ist an der Mantelwandung 9 des Brennergehäuses 4 ausgebildet.

Im Brennerkörper 4 des Brenners 2 sind sechs Luftdüsenrohre 19 vorgesehen. Die Luftdüsenrohre 19 sind kreisförmig mit jeweils gleichem Winkelabstand konzentrisch um das zentrale Sauerstoffdüserohr 6 bzw. das Brennstoffdüsenrohr 11 herum in den Zwischenräumen zwischen den Hauptsauerstoffdüsenrohren 14 angeordnet.

Ein Ende der Luftdüsenrohre 19 ist über ein Luftrohr 43 mit einem Luftringkanal 20 verbunden und das andere endet in der Brennerseite 7. Am Brennerseitigen Ende der Luftdüsenrohre 19 sind jeweils Luftdüsen 44 ausgebildet. Der Luftringkanal 20 ist in etwa in einer Ebene parallel zur Rückwandung 9 ausgebildet. Der Luftringkanal 20 ist über einen Luftrohrabschnitt 36 mit einem Luftanschluss 21 verbunden. Der Luftanschluss 21 ist an der Mantelwandung 9 des Brennergehäuses 4 ausgebildet.

In einer Draufsicht auf die Brennerseite 7 (Fig. 2) sind die Hauptsauerstoffdüsen 42 und die Luftdüsen 44 derart angeordnet, dass sie in einem Winkel von 30° zueinander versetzt sind.

Der Ofen 1 umfasst eine Sauerstoffversorgungsquelle 22.

Über eine Sauerstoffleitung 25 ist die Sauerstoffversorgungsquelle 22 mit dem Sauerstoffanschluss 10 verbunden. In der Sauerstoffleitung 25 ist ein Sauerstoffventil 26 angeordnet.

Die Sauerstoffversorgungsquelle ist über eine Hauptsauerstoffleitung 23 mit dem Hauptsauerstoffanschluss 17 verbunden. In der Hauptsauerstoffleitung 23 ist ein Hauptsauerstoffventil 24 angeordnet.

Weiterhin weist der Ofen ein Gebläse oder einen Ventilator 27 auf. Das Gebläse 27 ist über eine Luftleitung 28 mit dem Luftanschluss 21 verbunden. In der Luftleitung 28 ist eine Luftklappe 29 angeordnet.

Der Ofen 1 weist eine Brennstoffversorgungsquelle 30 auf. Die Brennstoffversorgungsquelle 30 ist über eine Brennstoffleitung 31 mit dem Brennstoffanschluss 13 verbunden. In der Brennstoffleitung 31 ist ein Brennstoffventil 32 angeordnet.

Weiterhin weist der Ofen eine Steuereinrichtung 33 auf. Die Steuereinrichtung 33 ist über Steuerleitungen 34 mit dem UV-Sensor 8, dem Brennstoffventil 32, dem Luftventil 29, dem Sauerstoffventil 26 und dem Hauptsauerstoffventil 24 verbunden.

Die Brennerseite 7 des Brenners 2 mündet in eine Brennkammer 3 (Fig. 3).

Die Sauerstoffdüse 37 und/oder die Brennstoffdüse 40 und/oder die Luftdüsen 44 und/oder die Hauptsauerstoffdüsen 42 können als sich zum Austritt hin verengende, einen Gasstrom beschleunigende Düsen oder als Lavaldüsen oder als Venturirohre ausgebildet sein.

Es kann ein Rekuperator bzw. ein Wärmeüberträger im Brennergehäuse 4 vorgesehen sein, um die Luftströme in den entsprechenden Rohren vor der Oxidation mit dem Brennstoff vorzuwärmen. Eine derartige Vorwärmung kann über die Wärme der Verbrennungsabgase erfolgen.

Im Folgenden wird ein Verfahren zur verdünnten Verbrennung anhand des erfindungsgemäßen Ofens 1 beschrieben.

Zunächst wird eine Stützflamme bereitgestellt.

Die Steuereinrichtung 33 öffnet zunächst über eine Steuerleitung 34 das Sauerstoffventil 26. Sauerstoff strömt aus der Sauerstoffversorgungsquelle 22 über die Sauerstoffleitung 25, über den Sauerstoffanschluss 10 und über das Sauerstoffrohr 38 in das zentrale Sauerstoffdüsenrohr 6. Hierdurch wird die zentrale Sauerstoffdüse 37 mit Sauerstoff beaufschlagt.

Die Geschwindigkeit des zentralen Sauerstoffstroms beim Austritt aus dem Brenner 2 beträgt zwischen 15 m/s und 50 m/s und vorzugsweise zwischen 25 m/s und 30 m/s. Der Sauerstoffstrom tritt in Längsrichtung 5 des Brenners 2 aus der zentralen Sauerstoffdüse 37 aus. Der Anteil des zentralen Sauerstoffstroms beträgt zwischen 1% und 5% des stöchiometrischen Sauerstoffbedarfs.

Mittels der Steuereinrichtung 33 wird der zentrale Sauerstoffstrom während des gesamten Betriebes konstant gehalten.

Gleichzeitig steuert die Steuereinrichtung 33 über eine Steuerleitung 34 das Brennstoffventil 32 an und öffnet dieses, so dass der zum Ausbilden einer Stützflamme benötigte Brennstoff bereitgestellt wird. Somit strömt aus der Brennstoffversorgungsquelle 30 über die Brennstoffleitung 31 und über den Brennstoffanschluss 13 Brennstoff in das Brennstoffrohr. Über die Brennstoffleitung 39 wird die Brennstoffdüse 40 mit Brennstoff beaufschlagt.

Die Geschwindigkeit des Brennstoffstroms beim Austritt aus dem Brenner 2 beträgt zwischen 50 m/s und 150 m/s und vorzugsweise zwischen 70 m/s und 90 m/s. Der Brennstoffstrom tritt in Längsrichtung 5 des Brenners 2 aus der Brennstoffdüse 11 aus. Nach dem Zünden mittels einer Zündeinrichtung verbrennt der zugeführte Brennstoff mit dem Sauerstoff aus der zentralen Sauerstoffdüse 37. Hierdurch bildet sich eine Stützflamme aus. Diese Stützflamme erzeugt genügend UV-Strahlung, dass diese mit dem UV-Sensor 8 detektierbar ist. Das Vorhandensein einer Stützflamme wird über eine Steuerleitung 34 vom UV-Sensor 8 an die Steuereinrichtung 33 gemeldet. Die Stützflamme bleibt während des gesamten Betriebes erhalten und ist somit auch während des gesamten Betriebes detektierbar. Ab einer Prozesstemperatur von 750°C kann die UV-Überwachung ausgeschaltet werden. Gemäß EN 746-2 handelt es sich ab dieser Temperatur um einen Hochtemperaturprozess. Die Stützflamme ist dann nicht mehr zwingend erforderlich und erzeugt unnötige Stickoxide. Ob die UV-Überwachung ausgeschaltet wird hängt vom Prozess und der Art der Flammenüberwachung ab. Die Prozesstemperatur sollte dann durch einen Temperaturfühler überwacht werden, wobei nicht der vorhandene Temperaturfühler für die Prozesssteuerung benutzt werden darf. Dennoch kann während des gesamten Betriebes eine kleine aber konstante Menge an Brennstoff über die Brennstoffdüse 44 und eine kleine konstante Menge an Sauerstoff über die zentrale Sauerstoffdüse 37 in den Brennraum 3 eingeleitet werden.

Zum Anfahren steuert die Steuereinrichtung 33 dann über eine Steuerleitung 34 parallel das Hauptsauerstoffventil 24 und das Brennstoffventil 32 an.

Über das nun weiter geöffnete Brennstoffventil 32 wird zusätzlich die zum Anfahren benötigte Brennstoffmenge zugeführt. Die Geschwindigkeit des Brennstoffstroms beim Austritt aus dem Brenner 2 beträgt immer noch zwischen 50 m/s und 150 m/s und vorzugsweise zwischen 70 m/s und 90 m/s. Der Brennstoffstrom tritt ebenfalls noch in Längsrichtung 5 des Brenners 2 aus der Brennstoffdüse 40 aus.

Über das geöffnete Sauerstoffventil 24 strömt die zum Anfahren des Brenners 2 bzw. zur Verbrennung stöchiometrisch benötigte Sauerstoffmenge aus der Sauerstoffversorgungsquelle 22 über die Hauptsauerstoffleitung 23 in den Hauptsauerstoffanschluss 17 und von dort aus in den Sauerstoffringkanal 15. Über den Sauerstoffringkanal 15 und die Hauptsauerstoffrohre 41 werden die sechs Hauptsauerstoffdüsenrohre 14 und somit die Hauptsauerstoffdüsen 42 mit Sauerstoff beaufschlagt.

Durch die Querschnittsverengungen in den Hauptsauerstoffdüsen 42 werden die Hauptsauerstoffströme zusätzlich beschleunigt. Die Geschwindigkeit der Hauptsauerstoffströme beträgt beim Austritt aus dem Brenner 2 zwischen 50 m/s bis 324 m/s und vorzugsweise zwischen 80 m/s bis 200 m/s. Die Hauptsauerstoffströme treten in etwa in Längsrichtung 5 aus den Hauptsauerstoffdüsen 42 aus. Vorteilhafterweise weist der aus den Hauptsauerstoffdüsen 42 austretende Sauerstoff ein Sauerstoffgehalt von mindestens 90-95 %, vorzugsweise von mindestens 99 % auf, um die Stickoxiderzeugung zu verringern.

Durch die Geschwindigkeit der Hauptsauerstoffströme und der Brennstoffströme wird eine Rezirkulation der Ofenabgase bewirkt, die sich wiederum mit den Hauptsauerstoffströmen und den Brennstoffströmen mischen.

Im folgenden wird der Nennbetrieb des Brenners erläutert. Der Nennbetrieb kann je nach Prozess und Prozessschritt mit Luft und/oder Sauerstoff ausgeführt werden.

Nachdem der Brennraum 3 seine Nenntemperatur von ca. 800°C bis 900°C erreicht hat, kann der Brenner auf einen Nennbetrieb mit Luft umgeschaltet werden. Hierfür steuert die Steuereinrichtung 33 über eine Steuerleitung 34 die Luftklappe 29 an und öffnet dieses. Hierdurch strömt vom Gebläse 27 bereitgestellte Luft über die Luftleitung 28 in den Luftanschluss 21 und über den Luftrohrabschnitt 36 in den Luftringkanal 20 und somit in die Luftrohre 43 und in die Luftdüsenrohre 19. Auf diese Weise werden die Luftdüsen 44 mit Umgebungsluft beaufschlagt. Die Luft weist beim Austritt einen Druck von unter 1 bar(ü) und vorzugsweise von unter 200 mbar(ü) bis 300 mbar(ü) auf.

Parallel zum Öffnen des Luftventils 29 wird das Hauptsauerstoffventil 24 geschlossen. Es strömt somit kein Sauerstoff mehr aus den Hauptsauerstoffdüsen 42.

Die Luft tritt aus den Luftdüsen 44 bzw. aus dem Brenner 2 mit einer Geschwindigkeit von 50 m/s bis 330 m/s und vorzugsweise zwischen 80 m/s bis 150 m/s aus. Durch die Querschnittverengung der Luftdüsen 44 werden die aus den Luftdüsen austretenden Luftströme beschleunigt. Diese Luftströme treten in etwa in Längsrichtung 5 des Brenner aus.

Im Nennbetrieb mit Luft kann der Brenner 2 somit ausschließlich mit dem in der Luft enthaltenen Sauerstoff betrieben werden.

Der Nennbetrieb mit Luft kann bspw. zum Warmhalten und Giessen vorgesehen sein.

Wenn im weiteren Verlauf des Betriebes ein höherer Energieeintrag benötigt wird öffnet die Steuereinrichtung 33 das Hauptsauerstoffventil 26 und dosiert der Verbrennung solange Sauerstoff über die Hauptsauerstoffdüsen 42 zu bis der gewünschte Energieeintrag erreicht ist. In gleichem stöchiometrischen Maße wie Sauerstoff zugeführt wird, wird die Menge an Luft, die aus den Luftdüsen austritt verringert.

Nachdem der Brennraum 3 seine Nenntemperatur von ca. 800°C bis 900°C erreicht hat, kann der Brenner auch in einem Nennbetrieb mit Sauerstoff weiterbetrieben werden. Ein Nennbetrieb mit Sauerstoff kann für Prozesse vorgesehen sein, bei dennen ein höherer Energieeintag benötigt wird. Dies ist bspw. beim Schmelzen der Fall. Der Brenner wird dann ausschließlich mit Sauerstoff als Oxidant betrieben. Für einen Nennbetrieb mit Sauerstoff kann die Vorrichtung kompakter ausgebildet werden, wobei gleichzeitig noch ein hoher Energieeintrag möglich ist.

Dreiatomige Gase wie z.B. Wasser und Kohlendioxid geben eine beträchtliche Menge ihrer Wärmeenergie als Wärmestrahlung ab. Daher führt das Vorhandensein derartiger dreiatomiger Gase zu einem den Wärmeausgleich innerhalb des Brennraumes 3, wodurch sich in Verbindung mit der Rezirkulation schnell eine gleichmäßige Temperaturverteilung im Brennraum einstellt so dass im gesamten Brennraum etwa die gleiche Temperatur vorliegt. Hierdurch werden Temperaturspitzen vermieden und eine gleichmäßigere Verteilung der Wärme bewirkt. Auf diese Weise wird der Wirkungsgrad des gesamten Ofens erhöht.

Durch die Rezirkulation der Ofenabgase findet eine schadstoffarme, d.h. NOx reduzierte Oxidation statt.

Das erfindungsgemäße Verfahren kann immer an die entsprechenden Anforderung angepasst bzw. optimiert werden, da ein Betrieb des Brenners mit Sauerstoff, Luft oder aber auch ein Mischbetrieb in jedem beliebigen Luft-Sauerstoff-Verhältnis ausführbar ist.

Im folgenden werden verschiedene Anordnungen der Hauptsauerstoffdüsen 14 und der Luftdüsen 19 beschrieben.

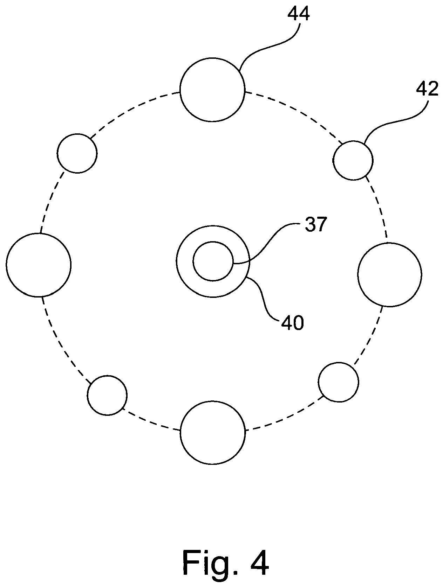

Es können bspw. vier Hauptsauerstoffdüsen 42 und vier Luftdüsen 44 vorgesehen sein. Diese sind bspw. kreisförmig um die zentrale Sauerstoffdüse 37 bzw. die Brennstoffdüse 40 herum angeordnet. Die Hauptsauerstoffdüsen 42 und die Luftdüsen 44 sind dann in einem Winkel von 45° zueinander versetzt (Fig. 4).

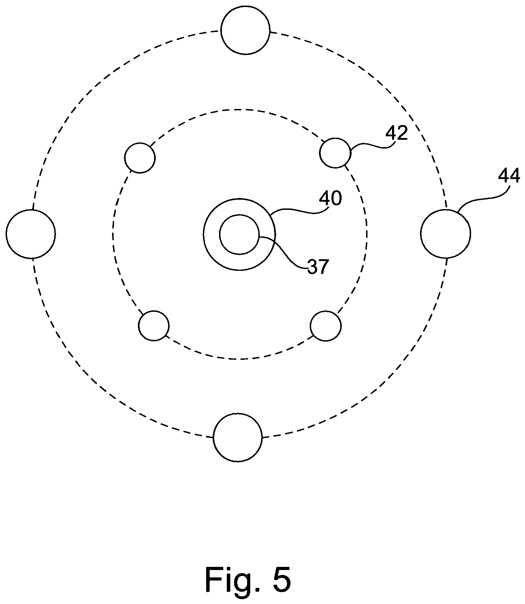

Die vier Hauptsauerstoffdüsen 42 können auf einem ersten Kreis um die zentrale Sauerstoffdüse 37 bzw. die Brennstoffdüse 40 herum angeordnet sein. Die vier Luftdüsen 44 sind dann bspw. auf einem größeren Kreis um die Luftdüsen 44 herum angeordnet (Fig. 5). Die Hauptsauerstoffdüsen 42 und die Luftdüsen 44 sind dann bspw. in einem Winkel von 22,5° zueinander versetzt

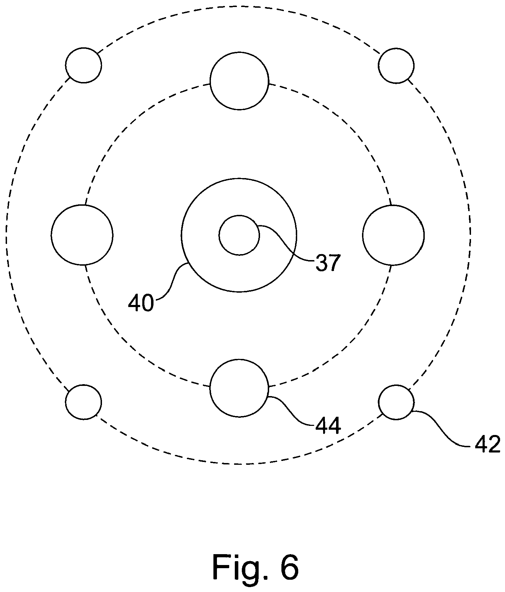

Die Luftdüsen und die Sauerstoffdüsen können in einer alternativen Anordnung auch derart angeordnet sein, dass die Luftdüsen auf einem inneren Kreis und die Sauerstoffdüsen auf einem äußeren Kreis angeordnet sind (Fig. 6).

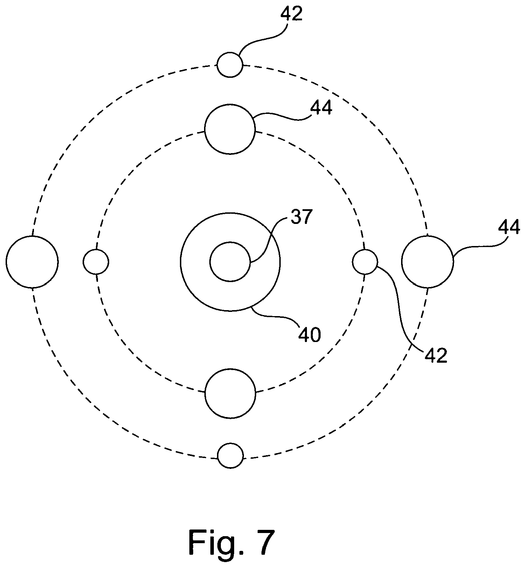

Es kann auch vorgesehen sein, dass jeweils zwei Luft- und zwei Sauerstoffdüsen auf jeweils einem Kreis angeordnet sind (Fig. 7).

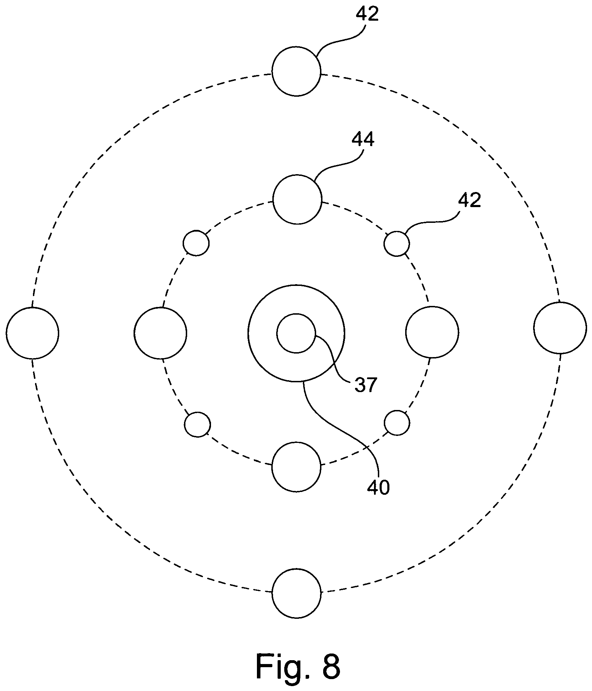

Auf dem inneren Kreis können auch vier Luft und vier Sauerstoffdüsen und auf dem äußeren Kreis nur vier Sauerstoff oder Luftdüsen angeordnet sein (Fig. 8).

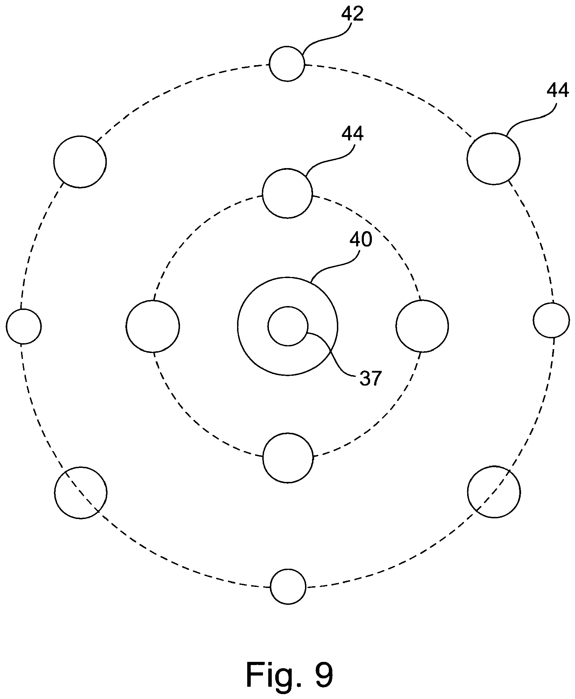

Es können bspw. auch vier Luftdüsen auf dem inneren Kreis und jeweils vier Luft und vier Sauerstoffdüsen auf dem äußeren Kreis angeordnet sein (Fig. 9).

Grundsätzlich sind die verschiedensten Winkelabstände der Düsen zueinander und auch Anordnungen auf einem, zwei, drei oder mehr Kreisen möglich.

**Bezugszeichenliste**

| | | | |
|---|---|---|---|
| 1 | Ofen | 31 | Brennstoffleitung |
| 2 | Brenner | 32 | Brennstoffventil |
| 3 | Brennkammer | 33 | Steuereinrichtung |
| 4 | Brennergehäuse | 34 | Steuerleitung |
| 5 | Längsrichtung | 35 | |
| 6 | zentrales Sauerstoffdüsenrohr | 36 | Luftrohrabschnitt |
| 7 | Vorderseite | 37 | Sauerstoffdüse |
| 8 | UV-Sensor | 38 | Sauerstoffrohr |
| 9 | Mantelwandung | 39 | Brennstoffrohr |
| 10 | Sauerstoffanschluss | 40 | Brennstoffdüse |
| 11 | Brennstoffdüsenrohr | 41 | Hauptsauerstoffrohr |
| 12 | Rückwandung | 42 | Hauptsauerstoffdüse |
| 13 | Brennstoffanschluss | 43 | Luftrohr |
| 14 | Hauptsauerstoffdüsenrohr | 44 | Luftdüse |
| 15 | Sauerstoffringkanal | | |
| 16 | Rohrabschnitt | | |
| 17 | Hauptsauerstoffanschluss | | |
| 18 | | | |
| 19 | Luftdüsenrohr | | |
| 20 | Luftringkanal | | |
| 21 | Luftanschluss | | |
| 22 | Sauerstoffversorgungsquelle | | |
| 23 | Hauptsauerstoffzuführleitung | | |
| 24 | Hauptsauerstoffventil | | |
| 25 | Sauerstoffleitung | | |
| 26 | Sauerstoffventil | | |
| 27 | Gebläse | | |
| 28 | Luftleitung | | |
| 29 | Luftklappe | | |
| 30 | Brennstoffversorgungsquelle | | |

## Patentansprüche

1. Verfahren zur verdünnten Verbrennung, wobei mit einem Brenner (2) ein Brennstoffstrom, mehrere Luftströme und mehrere Sauerstoffströme einem Brennraum (3) zugeführt werden, wobei der Brennstoffstrom über eine einzige Brennstoffdüse (40) zugeführt wird, wobei die Luftströme und die Sauerstoffströme räumlich getrennt voneinander zugeführt werden und wobei die Sauerstoff- und die Luftströme über mehrere Hauptsauerstoffdüsen (42) bzw. Luftdüsen (44) zugeführt werden, welche auf einem Kreis um den Brennstoffstrom angeordnet sind und wobei die Luftdüsen (44) in den Zwischenräumen zwischen den Hauptsauerstoffdüsen (42) angeordnet sind, **dadurch gekennzeichnet, dass** die Luft-und-Sauerstoffvolumenströme unabhängig voneinander einstellbar sind, zwischen einem reinen Betrieb mit Luft und einem reinen Betrieb mit Sauerstoff und einem Mischbetrieb mit Sauerstoff und Luft während des Brennvorganges gewechselt werden kann, und dass die Sauerstoffströme eine Geschwindigkeit von zumindest 50 m/s und vorzugsweise von 80 bis 200 m/s aufweisen und dass mit dem Brenner (2) dem Brennraum (3) ein weiterer Sauerstoffstrom zentral im Brennstoffstrom zugeführt wird und der somit vom Brennstoffstrom umgeben wird, wobei dieser Sauerstoffstrom mit einem Teil des Brennstoffs des Brennstoffstroms eine Stützflamme ausbildet.

2. Verfahren nach Anspruch 1,
**dadurch gekennzeichnet,**
**dass** die Ströme beim Austritt aus dem Brenner die gleiche Richtung aufweisen, die in etwa parallel zu einer Längsrichtung des Brenners ist.

3. Verfahren nach Anspruch 1 oder 2,
**dadurch gekennzeichnet,**
**dass** der Brenner beim Anfahren mit Sauerstoff und im Nennbetrieb mit entweder Luft oder Sauerstoff oder eine Mischung der Beiden als Oxidationsmittel betrieben wird.

4. Verfahren nach einem der Ansprüche 1 bis 3,
**dadurch gekennzeichnet,**
**dass** Abgas in den Brennraum rezirkuliert wird, wobei diese Rezirkulation intern oder extern erfolgen kann.

5. Verfahren nach einem der Ansprüche 1 bis 4,
**dadurch gekennzeichnet,**
**dass** die Luftströme eine Geschwindigkeit von zumindest 50 m/s und vorzugsweise von 80 m/s bis 150 m/s aufweisen.

6. Verfahren nach einem der Ansprüche 1 bis 5,
**dadurch gekennzeichnet,**
**dass** der Brennstoffstrom eine Geschwindigkeit von zumindest 50 m/s und vorzugsweise von 70 m/s bis 90 m/s aufweist.

## Claims

1. Method for diluted combustion, wherein a burner (2) is used to supply a fuel flow, multiple air flows and multiple oxygen flows to a combustion chamber (3), wherein the fuel flow is supplied via a single fuel nozzle (40), wherein the air flows and the oxygen flows are supplied spatially separated from one another, and wherein the oxygen flows and the air flows are supplied via multiple main oxygen nozzles (42) and, respectively, air nozzles (44) which are arranged on a circle around the fuel flow, and wherein the air nozzles (44) are arranged in the spaces between the main oxygen nozzles (42),
**characterized in that**
the volumetric flows of air and oxygen can be set independently of one another, it being possible to switch during the combustion process between pure operation with air and pure operation with oxygen and mixed operation with oxygen and air, and **in that** the oxygen flows have a velocity of at least 50 m/s and preferably of 80 to 200 m/s, and **in that** the burner is used to supply a further oxygen flow to the combustion chamber (3) centrally in the fuel flow, this being thus surrounded by the fuel flow, wherein this oxygen flow forms a pilot flame with part of the fuel of the fuel flow.

2. Method according to Claim 1,
**characterized in that**
on exiting the burner, the flows are oriented in the same direction which is approximately parallel to a longitudinal direction of the burner.

3. Method according to Claim 1 or 2,
**characterized in that**
during start-up, the burner is operated with oxygen and in normal operation is operated with air or oxygen or a mixture of the two as the oxidant.

4. Method according to one of Claims 1 to 3,
**characterized in that**
exhaust gas is recirculated into the combustion chamber, wherein this recirculation can take place internally or externally.

5. Method according to one of Claims 1 to 4,
**characterized in that**
the air flows have a velocity of at least 50 m/s and preferably of 80 m/s to 150 m/s.

6. Method according to one of Claims 1 to 5,
**characterized in that**
the fuel flow has a velocity of at least 50 m/s and preferably of 70 m/s to 90 m/s.

## Revendications

1. Procédé de combustion diluée, un flux de combustible, une pluralité de flux d'air et une pluralité de flux d'oxygène étant amenés à une chambre de combustion (3) au moyen d'un brûleur (2), le flux de combustible étant amené par le biais d'une buse de combustible unique (40), les flux d'air et les flux d'oxygène étant amenés de manière spatialement séparée les uns des autres, et les flux d'oxygène et les flux d'air étant amenés par le biais d'une pluralité de buses à oxygène principales (42) ou de buses à air (44) qui sont disposées sur un cercle autour du flux de combustible et les buses à air (44) étant disposées dans les espaces intermédiaires situés entre les buses à oxygène principales (42), **caractérisé en ce que** les débits d'air et d'oxygène sont réglables indépendamment, **en ce que** l'on peut passer entre un fonctionnement purement avec de l'air, un fonctionnement purement avec de l'oxygène et un fonctionnement mixte avec de l'oxygène et de l'air pendant le processus de combustion et **en ce que** les flux d'oxygène ont une vitesse d'au moins 50 m/s et de préférence de 80 à 200 m/s et **en ce qu'**un autre flux d'oxygène au centre du flux de combustible est amené à la chambre de combustion (3) au moyen du brûleur (2) et est donc entouré par le flux de combustible, ce flux d'oxygène formant avec une partie du combustible du flux de combustible une flamme de support.

2. Procédé selon la revendication 1,
**caractérisé en ce que**
les flux en sortie du brûleur vont dans la même direction qui est à peu près parallèle à une direction longitudinale du brûleur.

3. Procédé selon la revendication 1 ou 2,
**caractérisé en ce que**
le brûleur est utilisé avec de l'oxygène lors du démarrage et avec de l'air ou de l'oxygène ou un mélange des deux comme oxydant en fonctionnement nominal.

4. Procédé selon l'une des revendications 1 à 3,
**caractérisé en ce que**
les gaz d'échappement sont remis en circulation dans la chambre de combustion, cette remise en circulation pouvant être interne ou externe.

5. Procédé selon l'une des revendications 1 à 4,
**caractérisé en ce que**
les flux d'air ont une vitesse d'au moins 50 m/s et de préférence de 80 m/s à 150 m/s.

6. Procédé selon l'une des revendications 1 à 5,
**caractérisé en ce que**
le flux de combustible a une vitesse d'au moins 50 m/s et de préférence de 70 m/s à 90 m/s.
